# EUROPÄISCHE PATENTANMELDUNG

(11) **EP 0 612 609 A1**
(43) Veröffentlichungstag der Anmeldung: **31.08.1994**
(21) Anmeldenummer: 94100535.7
(22) Anmeldetag: 15.01.1994
(51) Int. Cl.: B32B 15/10, B27D 1/00, B60R 13/00

(54) **Verfahren zur Herstellung eines furnierten und gebogenen Verkleidungsteiles aus einem Holz/Metall-Laminat, insbesondere eines Innenausbauteiles von Kraftfahrzeugen**

(30) Priorität: 24.02.1993 DE 4305611
(71) Anmelder: MERCEDES-BENZ AG, D-70327 Stuttgart (DE)
(72) Erfinder: Kellermann, Andreas, Dipl.-Ing., D-71263 Weil der Stadt (DE); Büker, Dierk, D-71032 Böblingen (DE); Barth, Clemens, D-71034 Böblingen (DE)

(57) **Zusammenfassung**

Die Erfindung bezieht sich auf ein Verfahren zur Herstellung eines furnierten und gebogenen Verkleidungsteiles aus einem Holz/Metall-Laminat, insbesondere eines Innenausbauteiles von Kraftfahrzeugen, bei dem die nachfolgend aufgeführten Verfahrensschritte in der erwähnten Reihenfolge durchgeführt werden; ein ebenes Blech wird mit einem Echtholzfurnier zu einem Halbzeug-Laminat verklebt, das Echtholzfurnier des Halbzeug-Laminat wird sichtseitig oberflächlich geglättet und endbearbeitet, aus dem behandelten Halbzeug-Laminat werden ebene Zuschnitte von Rohlingen der Verkleidungsteile ausgeschnitten und die Rohlinge der Verkleidungsteile werden in die Einbauform der Verkleidungsteile geformt.

## Beschreibung

Die Erfindung betrifft ein Verfahren zur Herstellung eines furnierten und gebogenen Verkleidungsteiles aus einem Holz/Metall-Laminat, insbesondere eines Innenausbauteiles von Kraftfahrzeugen, nach der Gesamtheit der Merkmale des Anspruchs 1.

Aus der US-PS 31 10 643 ist ein Verfahren zur Herstellung eines furnierten und gebogenen Innenausbauteiles von Kraftfahrzeugen bekannt, bei dem ein Blech auf seiner dem Furnier zugeordneten Seite angeätzt und mit einem Echtholzfurnier verklebt wird. Das derart hergestellte Halbzeug-Laminat wird dann zur besseren Verbindung des Echtholzfurnieres auf das Blech gepreßt, wobei das Edelholzfurnier gleichzeitig geglättet wird. Anschließend wird aus dem Halbzeug-Laminat eine furnierte aber noch flache Grundform des Verkleidungsteiles mit samt eventuellen Durchbrüchen ausgeschnitten. Daran anschließend wird die Sichtseite des Echtholzfurnieres zum Einweichen mit heißem Dampf beaufschlagt. Die so vorbereitet, furnierte Grundform wird anschließend in die gewünschte Einbauform gebogen und getrocknet. Nach der Trocknung wird die Sichtseite des gebogenen Innenausbauteiles oberflächenbehandelt und mit Klarlack bzw. einer lichtdurchlässigen Folie versiegelt, wobei vor der Versiegelung noch verschiedene Bearbeitungsschritte wie Bleichen, Färben, Patinieren oder dgl. stattfinden können. Die Qualität und die Ästhetik eines solchen Innenausbauteiles sind sehr gut, jedoch ist die Herstellung sehr kostenintensiv.

Ausgehend von diesem Stand der Technik ist es die Aufgabe der Erfindung, ein verfahren zur Herstellung eines furnierten und gebogenen Verkleidungsteiles aus einem Holz/Metall-Laminat dahingehend zu entwickeln, daß die Herstellung des furnierten und gebogenen Verkleidungsteiles kostengünstig ist.

Die Aufgabe wird erfindungsgemäß durch ein Verfahren mit der Gesamtheit der Verfahrensschritte des Anspruchs 1 gelöst. Bei dem vorgestellten Verfahren ist die Oberfläche der Sichtseite des Echtholzfurnieres nach dem Biegen des furnierten und versiegelten Rohlings des Verkleidungsteiles in die Endform des Verkleidungsteiles rißfrei und weist eine gute Oberflächenqualität auf. Dank der Endbearbeitung bzgl. der Versiegelung der sichtseitigen Oberfläche des Echtholzfurnieres in flachem Zustand können die diese Endbearbeitung betreffenden Arbeitsschritte von Maschinen in einfacher und kostengünstiger Weise ausgeführt werden. Ferner ist hierdurch eine gleichzeitige Bearbeitung von Sichtseiten mehrerer Verkleidungsteile, die alle aus einer einzigen flachen Platte hergestellt werden können, mit einer einzigen Maschine möglich, weshalb sich die Produktkosten nochmals verringern.

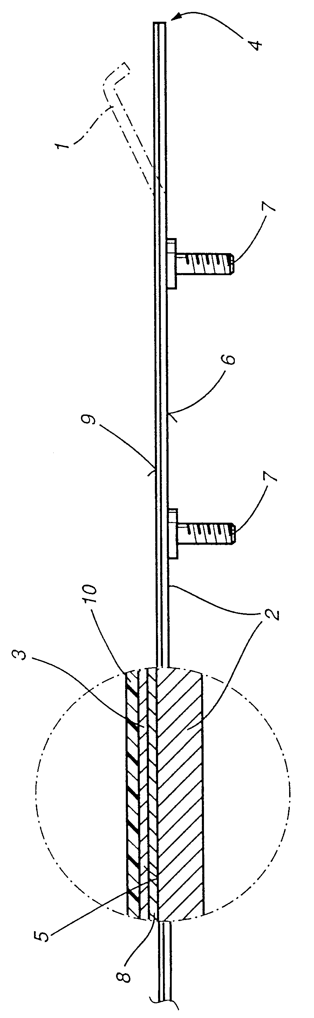

Weitere zweckmäßige Verfahrensschritte sind den Unteransprüchen entnehmbar. Im übrigen wird die Erfindung anhand eines in der einzigen Zeichnung dargestellten Ausführungsbeispieles im folgenden erläutert. In der einzigen Figur ist strichpunktiert ein Verkleidungsteil 1 und mit der durchgezogenen Linie ein Rohling des späteren Verkleidungsteiles 1 dargestellt. Von besonderen Interesse sind derartige Verkleidungsteile 1 als Innenausbauteile von Kraftfahrzeugen, da derartige Innenausbauteile trotz der ästhetisch ansprechenden Holzausbildung bei einem Unfall splitterfrei bleiben. Das aus einer Ebene gebogene Verkleidungsteil 1 weist ein Blech 2, ein auf einer zu furnierenden Seite 5 angeklebtes und insbesondere aus Buche gefertigtes Blindfurnier 8 und ein darauf angeordnetes Echtholzfurnier 3 eines Edelholzes und ein auf der freien Sichtseite des Echtholzfurnieres 3 aufgetragene Hochglanz-Lackierung 10 mit Klarlack auf. Das Blindfurnier muß nicht notwendigerweise aus Buche gefertigt sein, sondern es kommen auch andere Materialien, wie z.B. Tulpe oder Whitewood in Frage. An der frei zugänglichen und von der Sichtseite des Echtholzfurnieres 3 abliegenden Rückseite 6 des Bleches 2 sind verschiedene Befestigungsmittel 7, wie Schrauben, Clips oder dgl., angeordnet.

Die Herstellung des Verkleidungsteiles wird im folgenden beschrieben. Zuerst werden auf der von der zu furnierenden Seite 5 abliegenden Rückseite 6 des unfurnierten Bleches 2 Befestigungsmitteln 7 wie Schrauben oder dgl. entsprechend der späteren Lage der Befestigungspunkte des späteren Verkleidungsteiles 1 vorzugsweise widerstandselektrisch angeschweißt oder über einen Klebefilm verpreßt. Hierbei ist von Vorteil, daß sich die Befestigungsstellen der Befestigungsmittel 7 nicht auf der Sichtseite 9 des Verkleidungsteiles 1 abzeichnen. Anschließend wird die zu furnierende Seite 5 des Bleches 2 vorbehandelt, bspw. angeätzt usw., und mit dem aus Echtholzfurnier 3 und Blindfurnier 8 gebildeten Furnierblatt zu einem Halbzeug-Laminat 4 verklebt. Die Materialstärke des aus Blindfurnier 8 und Echtholzfurnier 3 gebildeten Furnierblattes sollte 1 mm nicht übersteigen, damit sich an Kanten, die mit kleinen Radien gebogen werden müsse, keine Risse bilden. Des weiteren besteht bei dieser Materialstärke die Möglichkeit, eine zu furnierende Fläche mit kleineren Furnierteilen, die auf Stoß aneinander angeordnet werden, zu belegen. Das hohe Wirtschaftlichkeit des erfindungsgemäße Verfahrens ergibt sich insbesondere durch den folgenden Verfahrensschritt. In diesem Verfahrensschritt wird das Echtholzfurnier 3 des ebenen Halbzeug-Laminates 4 sichtseitig oberflächlich geglättet und endbearbeitet, wobei vor dem Auftrag der Hochglanz-Lackschicht 10 auf die Sichtseite 9 des Echtholzfurnieres 3 diese Sichtseite 9 noch bspw. durch veredelnd bearbeitet wird. Da die die sichtseitige Oberfläche endbearbeitenden Arbeitsschritte in ebener Lage des Halbzeug-Laminates 4 ausgeführt werden, können diese mechanisiert und mit einfachen Maschinen vorgenommen werden. Hiernach werden aus dem derart vorbehandelten Halbzeug-Laminat 4 ebene Zuschnitte von Rohlingen der verkleidungsteile 1 ausgeschnitten, danach eventuell Durchbrüche gefräst und die Rohlinge der Verkleidungsteile 1 in die Einbauform der Verkleidungsteile 1 geformt. Trotz des Biegens der furnierten Rohlinge mit trockenem Echtholzfurnier 3 weisen die fertigen Verkleidungsteile 1 auf der Sichtseite 9 eine hohe Oberflächenqualität auf, die insbesondere falten- und rißfrei ist.

## Patentansprüche

1. Verfahren zur Herstellung eines furnierten und gebogenen Verkleidungsteiles (1) aus einem Holz/Metall-Laminat, insbesondere von Innenausbauteilen von Kraftfahrzeugen, bei welchem Verfahren die nachfolgend aufgeführten Verfahrensschritte in der erwähnten Reihenfolge durchgeführt werden;
- ein ebenes Blech (2) wird mit einem Echtholzfurnier (3) zu einem Halbzeug-Laminat (4) verklebt,
- das Echtholzfurnier (3) des Halbzeug-Laminat (4) wird sichtseitig oberflächig geglättet und im Sinne einer Oberflächenversiegelung der Sichtseite (9) des Echtholzfurnieres (3) in flachem Zustand endbearbeitet,
- aus dem solcherart behandelten Halbzeug-Laminat (4) werden ebene Zuschnitte von Rohlingen der Verkleidungsteile (1) ausgeschnitten und
- die Rohlinge der Verkleidungsteile (1) werden in die Einbauform der Verkleidungsteile geformt.

2. Verfahren nach Anspruch 1,
**dadurch gekennzeichnet,**
daß vor dem verkleben des Bleches (2) mit dem Echtholzfurnier (3) das Blech (2) auf seiner von der zu furnierenden Seite (5) abliegenden Rückseite (6) insbesondere durch eine widerstandselektrisch Verschweißung mit Befestigungsmitteln (7) versehen wird, welche auf der Rückseite (6) des Bleches (2) entsprechend der späteren Lage der Befestigungspunkte des späteren Verkleidungsteiles (1) angeordnet werden.

3. Verfahren nach Anspruch 1,
**dadurch gekennzeichnet,**
daß als Echtholzfurnier (3) ein wenigstens zweischichtiges Furnier verwendet wird, das blechseitig ein Blindfurnier (8) aufweist und daß die Materialstärke des Echtholzfurnieres (3) maximal 1 mm beträgt.

4. Verfahren nach Anspruch 1,
**dadurch gekennzeichnet,**
daß das Blindfurnier (8) aus Buchenholz und/oder aus Tulpe und/oder aus Whitewood gefertigt ist.

5. Verfahren nach Anspruch 1,
**dadurch gekennzeichnet,**
daß ein Blech (2) aus Aluminium oder aus einer Aluminium-Legierung verwandt wird.

6. Verfahren nach Anspruch 1,
**dadurch gekennzeichnet,**
daß die Endbearbeitung der Sichtseite (9) des Echtholzfurnieres (3) des Halbzeug-Laminates (4) eine Hochglanz-Lackierung (10) mit Klarlack einschließt.

7. Verfahren nach Anspruch 1,
**dadurch gekennzeichnet,**
daß vor dem Verkleben des Bleches (2) mit dem Echtholzfurnier (3) das Blech (2) auf seiner von der zu furnierenden Seite (5) abliegenden Rückseite (6) insbesondere durch eine Verpressung mit einem Klebefilm mit Befestigungsmitteln (7) versehen wird, welche auf der Rückseite (6) des Bleches (2) entsprechend der späteren Lage der Befestigungspunkte des späteren Verkleidungsteiles (1) angeordnet werden.
